# EUROPÄISCHE PATENTSCHRIFT

(11) **EP 3 022 122 B1**
(45) Veröffentlichungstag und Bekanntmachung des Hinweises auf die Patenterteilung: **09.08.2017**
(21) Anmeldenummer: 14744453.3
(22) Anmeldetag: 20.06.2014
(51) Int. Cl.: B65D 19/44

(54) **VORRICHTUNG ZUR SICHERUNG VON FÄSSERN AN EINER PALETTE**
DEVICE FOR SECURING BARRELS ONTO A PALLET
DISPOSITIF POUR FIXER DES TONNEAUX SUR UNE PALETTE

(30) Priorität: 19.07.2013 DE 102013214223
(43) Veröffentlichungstag der Anmeldung: 25.05.2016
(73) Patentinhaber: Strauch, Alexander, 67578 Gimbsheim (DE)
(72) Erfinder: Strauch, Alexander, 67578 Gimbsheim (DE)
(74) Vertreter: Patent- und Rechtsanwälte Ullrich & Naumann
(86) Internationale Anmeldenummer: PCT/DE2014/200272
(87) Internationale Veröffentlichungsnummer: WO 2015/007281

(56) Entgegenhaltungen:
- DE-B- 1 043 952
- JP-A- 2010 276 577
- US-A- 2 443 684
- US-A- 2 702 641
- US-A- 3 217 892
- US-A- 4 403 556
- US-A- 5 190 273
- US-A- 6 073 768

## Beschreibung

Die vorliegende Erfindung betrifft eine Vorrichtung zur Sicherung von Fässern an einer Palette, mit einem an der Palette befestigbaren, stabförmigen Befestigungselement und einem mit dem Befestigungselement zusammenwirkenden und auf die Fässer auflegbaren Halteelement zum Eingriff mit den Fässern. Vorrichtungen der in Rede stehenden Art sind aus dem Stand der Technik bekannt. So ist aus der DE 41 11 692 C2 eine Transportpalette für Fässer bekannt, die eine auf einer Wannenpalette 10 befestigte Konsole 26 mit einem stabförmigen Befestigungselement 24 und daran mittels einer weiteren Konsole 30 montierte Halteelementen 38, 42 aufweist. Damit ist eine Befestigung von Fässern an der speziell ausgebildeten Transportpalette möglich. Ferner ist aus der JP 2010-276577 A eine Vorrichtung zur Sicherung von Fässern bekannt, die ein Befestigungselement 1 aufweist, an dem ein gabelförmiges Ende 3 ausgebildet ist, mit dem das Befestigungselement 1 an einer dafür geeigneten Palette eingehängt werden kann. Ferner umfasst das Befestigungselement 1 an dem der Palette abgewandten Ende ein Gewinde 4, mit dem über eine Mutter 6 ein mit dem Befestigungselement 1 zusammenwirkendes Halteelement 2 am Befestigungselement 1 anbringbar ist. Des Weiteren ist aus der US 2 443 684 A eine Vorrichtung zur Sicherung eines Transportguts an einer Palette 10 bekannt, wobei die Vorrichtung ein an der Palette befestigbares stabförmiges Befestigungselement 20 und ein mit dem Befestigungselement zusammenwirkendes Halteelement 25 zum Eingriff mit dem Transportgut aufweist. An einem Ende 21 des Befestigungselements ist ein Gewinde zur Befestigung an der Palette ausgebildet. Die bekannte Vorrichtung weist zur Zusammenwirkung mit dem Gewinde einen Sockel 14 mit einem darin ausgebildeten Innengewinde 19 auf.

Des Weiteren ist aus der US 4 403 556 A eine Vorrichtung zur Sicherung von Fässern an einem Ladungsträger bekannt. Die Vorrichtung weist ein stabförmiges Befestigungselement 26 mit einer darin angeordneten Mutter 29 auf, in die ein Gewindestab 28 zur Ankopplung eines Halteelements 33 eingeschraubt ist. Das Befestigungselement ist über einen Koppelmechanismus aus Befestigungsplatten 25 und einem Stift 27 mit dem Ladungsträger verbunden.

Des Weiteren ist aus der US 3 217 892 A eine Vorrichtung zur Sicherung von Fässern an einem Ladungsträger bekannt. Dabei weist die Vorrichtung ein stabförmiges Befestigungselement 31 und ein mit dem Befestigungselement zusammenwirkendes Halteelement 15 zum Eingriff mit den Fässern auf. Das Befestigungselement weist einen verdickten Endabschnitt 33 auf, der in ein Sockelelement 21 einhängbar ist, um eine Befestigung des Befestigungselements an dem Ladungsträger zu ermöglichen. Bei den bekannten Vorrichtungen zur Sicherung von Transportgut ist nachteilig, dass diese nur bei besonders hergestellten oder geeigneten Ladungsträgern verwendbar sind. Eine universelle Einsetzbarkeit bei unterschiedlichen Ladungsträgern ist nicht gegeben. Zudem ist bei den bekannten Sicherungsvorrichtungen problematisch, dass diese in der Handhabung aufwändig sind. So bestehen diese aus einer Vielzahl einzelner Komponenten, die während des Befestigungsvorganges gehalten und/oder mit großer Sorgfalt eingehängt werden müssen oder es ist selbst bei der Arretierung lediglich eines Fasses eine Handhabung mehrerer Befestigungselemente und/oder Stellglieder notwendig.

Der vorliegenden Erfindung liegt daher die Aufgabe zugrunde, eine Vorrichtung der eingangs genannten Art derart auszugestalten und weiterzubilden, dass bei universeller Einsetzbarkeit und einer einfachen Handhabung eine sichere Befestigung von Transportgut ermöglicht ist.

Erfindungsgemäß wird die voranstehende Aufgabe durch eine Vorrichtung mit den Merkmalen des Anspruchs 1 gelöst. Danach ist die in Rede stehende Vorrichtung derart ausgestaltet und weitergebildet, dass das Befestigungselement als Schraube mit einem am mit dem Halteelement zusammenwirkenden Ende ausgebildeten Schraubenkopf und mit einem selbstschneidenden Gewinde am anderen Ende der Schraube zur unmittelbaren Befestigung an der Palette durch Einschrauben der Schraube in die Palette ausgebildet ist. In erfindungsgemäßer Weise ist zunächst erkannt worden, dass eine einfache Handhabung in der Befestigung von Fässern ermöglicht ist, wenn das Befestigungselement unmittelbar an der Palette befestigt werden kann. Hierzu ist an einem Ende des Befestigungselements ein seibstschneidendes Gewinde ausgebildet, welches zur Befestigung an der Palette dient. Hierdurch ist eine besonders einfache und stabile Ausgestaltung der erfindungsgemäßen Vorrichtung ermöglicht, da das Befestigungselement unmittelbar an der Palette befestigt werden kann. Dabei erfolgt eine Befestigung lediglich von einer Seite aus, nämlich durch Einschrauben des Befestigungselements von oben. Zugleich ist hier eine universelle Einsetzbarkeit gegeben, bspw. an den in der Speditionsbranche weithin verwendeten Euro-Paletten. Dabei wird eine besonders sichere Befestigung der Fässer an der Palette realisiert, da über das auf das Halteelement wirkende Befestigungselement und dessen Gewinde eine hohe Zugkraft in Richtung der Palette aufgebracht werden kann. Somit sind die Fässer sicher an der Palette fixiert, so dass auch bei einem Kippen der Palette eine sichere Arretierung gewährleistet ist. Eine zusätzliche Sicherung durch Bänder, Folien oder Seile ist nicht erforderlich. Im Ergebnis ist eine in der Handhabung einfache und zugleich stabile Befestigung von Fässern realisiert.

Somit ist mit der erfindungsgemäßen Vorrichtung eine Vorrichtung der eingangs genannten Art derart ausgestaltet und weitergebildet, dass bei universeller Einsetzbarkeit und einer einfachen Handhabung eine sichere Befestigung von Fässern ermöglicht ist.

Das Gewinde an einem Ende des Befestigungselements ist als selbstschneidendes Gewinde ausgebildet. Hierbei kann das Gewinde wie bei einer Holzschraube oder einer Blechschraube ausgeführt sein, so dass das Gewinde beim Einbringen des Befestigungselements in die Palette selbst ein mit seinem Gewinde korrespondierendes Gegengewinde in der Palette ausbildet. Bei dem Gewinde des Befestigungselements handelt es sich um ein Außengewinde. Bei der Ausgestaltung als selbstschneidendes Gewinde ist eine Verwendung der Vorrichtung bei jeglicher Art von Paletten ohne Vorbereitung der Palette möglich. Insoweit ist die Vorrichtung bspw. bei einer herkömmlichen Euro-Palette verwendbar, wobei keine die weitere Verwendbarkeit der Palette verhindernden Beschädigungen auftreten, so dass die Palette anschließend in üblicher Weise weiterverwendet werden kann. Ein Bereithalten von speziell vorbereiteten oder gefertigten Paletten ist daher nicht erforderlich.

Im Konkreten kann das Halteelement einen Durchgang oder eine Bohrung für das Befestigungselement aufweisen. Damit ist auf konstruktiv einfache Weise ein stabiles Widerlager gebildet, so dass durch das Zusammenwirken von Halteelement und Befestigungselement eine hohe Kraft übertragen werden kann und die Fässer sicher an der Palette befestigt werden können. Zur Vermeidung einer Verletzungsgefahr für den Werker ist denkbar, dass der Durchgang eine Ansenkung oder Vertiefung, insbesondere eine konische Ansenkung oder zylinderförmige Vertiefung, aufweist.

Das Befestigungselement weist am mit dem Halteelement zusammenwirkenden Ende einen Schraubenkopf auf. Der Schraubenkopf kann in Form eines Senkkopfes ausgebildet sein. Im Falle einer Ausnehmung oder Vertiefung kann der Schraubenkopf gänzlich darin aufgenommen sein, so dass sich am Halteelement eine im Wesentlichen ebene Oberfläche ergibt. Vorteilhaft sind eine Ansenkung des Durchgangs und eine Ausgestaltung des Schraubenkopfes in Form eines Senkkopfes, wobei durch die sich daraus ergebende große Oberfläche eine große Zugkraft übertragen werden kann. Bei einer alternativen vorteilhaften Ausgestaltung kann der Schraubenkopf als Flachkopf oder Linsensenkkopf mit vorzugsweise angepresster Scheibe ausgebildet sein. Auch hierdurch ist eine sehr sichere Befestigung von Fässern an der Palette ermöglicht. Das Befestigungselement ist als Schraube ausgebildet. Dies ermöglicht neben einer einfachen Handhabung auch ein Aufbringen von hohen Kräften auf die Schraube, so dass die Fässer sicher an der Palette befestigt werden können. Die Schraube kann verschiedene Schraubenkopfantriebe aufweisen, bspw. einen Innensechskant, einen Philips-, Pozidriv- oder Torx-Schraubenkopfantrieb. Ebenfalls denkbar ist eine Ausgestaltung mit einem Schraubenkopfantrieb in Form einer Rändelschraube oder Flügelschraube, so dass ein Befestigen oder Lösen der Schraube ohne Werkzeug möglich ist.

Das Halteelement kann mindestens eine bogenförmige Ausnehmung oder Nut zur Aufnahme eines Randes der Fässer aufweisen. Ausnehmung oder Nut ist hier im weitesten Sinne zu verstehen, so ist damit eine jegliche Ausführung gemeint, die einen Rand der Fässer komplementär aufnimmt. Insoweit kann es sich hierbei um eine Ausnehmung, Nut, Aussparung oder um einen im Halteelement ausgebildeten Falz handeln.

In Bezug auf die konstruktive Ausgestaltung des Halteelements ist denkbar, dass dieses aus Kunststoff ausgebildet ist. Zusätzlich zum geringen Gewicht des Kunststoffs ist damit auch eine korrosionsbeständige Ausführung realisiert. Zudem werden Beschädigungen der Fässer weitestgehend verhindert. Zum Eingriff mit den Fässern kann das Halteelement im Falle einer Kunststoffausführung eine bogenförmige Ausnehmung oder Nut aufweisen. Sind zwei oder vier bogenförmige Ausnehmungen im Halteelement ausgebildet, so können damit zwei oder vier Fässer an der Palette befestigt werden, und zwar durch Einbringen lediglich eines Befestigungselements in die Palette. Es ist jedoch auch eine Ausgestaltung mit drei bogenförmigen Ausnehmungen nützlich, so dass auch drei Fässer sicher befestigt werden können. Das Halteelement könnte hierfür eine im Wesentlichen dreieckige Form aufweisen mit vorzugsweise den Ausnehmungen an den Ecken des Dreiecks.

Ebenfalls kann das Halteelement aus Metall, insbesondere aus Aluminium oder Stahlblech ausgebildet sein. Auf diesem Wege ist eine stabile Ausführung des Halteelements möglich. Dabei kann insbesondere bei einer Ausgestaltung aus Stahlblech aufgrund dessen hoher Elastizität, eine hohe Spannkraft auf die Fässer aufgebracht werden, ohne das Halteelement plastisch zu verformen. Das Halteelement kann dabei im Wege eines Span- und/oder Pressvorgangs auf einfache und kostengünstige Weise hergestellt werden. Zur Erhöhung der Formstabilität des Halteelements können aus Gründen der Versteifung Sicken oder Rippen ausgebildet sein.

Zur Dämpfung kann das Halteelement im Bereich der Ausnehmung oder Nut Abschnitte oder Einlagen aus Kunststoff, Gummi oder dgl. aufweisen. Durch die Abschnitte oder Einlagen können Beschädigungen an den Fässern vermieden werden. Zudem ist damit eine besonders sichere Aufnahme eines Randes der Fässer ermöglicht, da durch die Abschnitte oder Einlagen ein komplementärer Eingriff begünstigt wird.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: ein Ausführungsbeispiel einer erfindungsgemäßen Vorrichtung in teilweise geschnittener Darstellung,
- Fig. 2: ein erstes Ausführungsbeispiel eines Halteelements einer erfindungsgemäßen Vorrichtung in einer Draufsicht,
- Fig. 3: ein zweites Ausführungsbeispiel eines Halteelements einer erfindungsgemäßen Vorrichtung in einer Draufsicht und
- Fig. 4: ein zweites Ausführungsbeispiel eines Halteelements einer erfindungsgemäßen Vorrichtung in einer geschnittenen Seitenansicht entlang der Linie A-A.

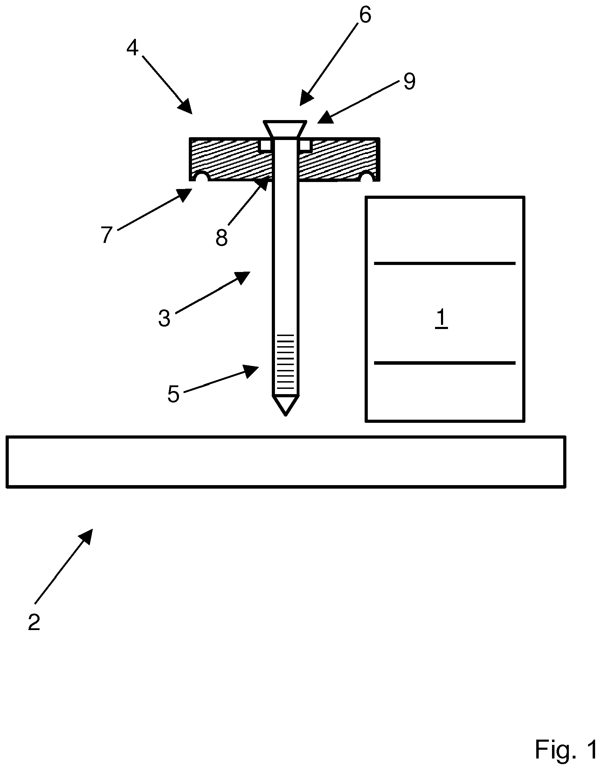

Fig. 1 zeigt ein Ausführungsbeispiel einer erfindungsgemäßen Vorrichtung in teilweise geschnittener Darstellung. Die Vorrichtung dient zur Sicherung von Fässern 1 an einer Palette 2. Die Vorrichtung weist ein an der Palette 2 befestigbares stabförmiges Befestigungselement 3 und ein mit dem Befestigungselement 3 zusammenwirkendes Halteelement 4 zum Eingriff mit dem Fass 1.

Das Befestigungselement 3 ist erfindungsgemäß als Schraube 3 mit einem selbstschneidenden Gewinde 5 an dem der Palette 2 zugewandtem Ende ausgebildet. Die Schraube 3 weist einen Schraubenkopf 6 auf, der als Senkkopf ausgebildet ist. An der dem Fass 1 zugewandten Seite weist das Halteelement 4 eine bogenförmige Ausnehmung 7 auf, die komplementär mit einem Rand des Fasses 1 eingreifen kann.

Das Halteelement 4 weist einen Durchgang 8 oder eine Bohrung 8 für die Schraube 3 auf. Der Schraubenkopf 6 kann in einer Ausnehmung 9 aufgenommen sein. Der Schraubenkopf 6 weist ferner einen Schraubenkopfantrieb in Form von Torx auf. Mit einem geeigneten Werkzeug, bspw. einem Schraubendreher oder einem Akkuschrauber, kann die Schraube 3 in die Palette 2 eingebracht und anschließend wieder gelöst werden.

Ein Befestigen von Fässern 1 auf der Palette 2 läuft folgendermaßen ab:

Zunächst werden die Fässer 1, bspw. zwei oder vier Fässer auf der Palette 2 positioniert. Anschließend wird das Halteelement 4 derart auf die Fässer 1 aufgelegt, dass die Ausnehmungen oder Nuten 7 komplementär mit den Rändern der Fässer 1 eingreifen. Anschließend wird mit einem geeigneten Werkzeug, bspw. mit einem Schraubendreher oder einem Akkuschrauber die Schraube 3 in die Palette 2 eingebracht. Hierdurch ist eine sichere und stabile Befestigung der Fässer 1 auf der Palette 2 realisiert.

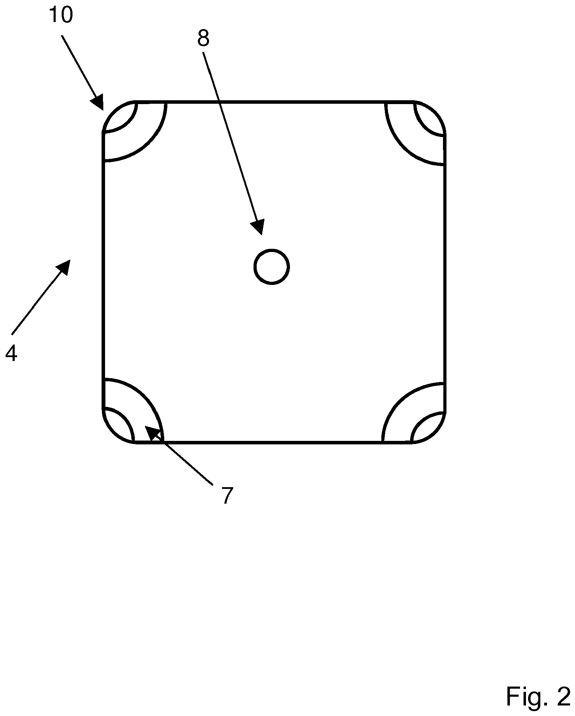

Fig. 2 zeigt ein erstes Ausführungsbeispiel eines Halteelements einer erfindungsgemäßen Vorrichtung in einer Draufsicht. Das Halteelement 4 weist eine rechteckige oder quadratische Ausgestaltung mit abgeschrägten oder abgerundeten Kanten 10 auf, die der Übersichtlichkeit wegen lediglich einmal mit Bezugszeichen versehen sind. Der Durchgang 8 für die Schraube 3 ist in der Mitte des Halteelements 4 angeordnet. Zum komplementären Eingriff mit Rändern der Fässer weist das Halteelement 4 bogenförmige Nuten 7 auf. Die Nuten 7 weisen einen im Wesentlichen halbkreisförmigen Querschnitt auf, so dass ein komplementärer Eingriff mit den Fassrändern ermöglicht ist. Das Halteelement 4 ist gemäß diesem Ausführungsbeispiel aus Kunststoff ausgebildet.

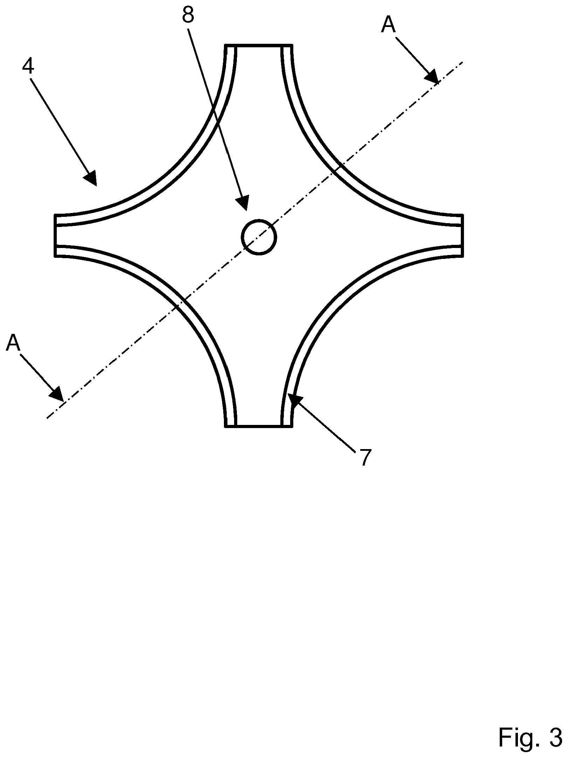

Fig. 3 zeigt ein zweites Ausführungsbeispiel eines Halteelements einer erfindungsgemäßen Vorrichtung in einer Draufsicht. Das Halteelement 4 weist eine im Wesentlichen rautenförmige Grundform auf, wobei an den Rändern des Halteelements 4 Ausnehmungen oder Nuten 7 zur Aufnahme der Fassränder ausgebildet sind. Der Durchgang 8 für die Schraube 3 ist in der Mitte des Halteelements 4 ausgebildet. Das Halteelement 4 im vorliegenden Ausführungsbeispiel aus Stahlblech ausgebildet und im Wege eines Press- und/oder Stanzvorganges hergestellt.

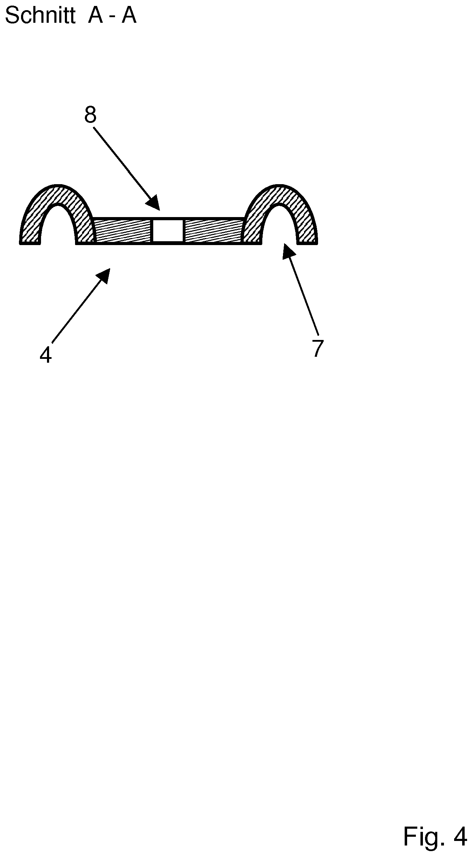

Fig. 4 zeigt ein zweites Ausführungsbeispiel eines Halteelements einer erfindungsgemäßen Vorrichtung in der geschnittenen Seitenansicht entlang einer Linie A-A (siehe Fig. 3). Die Ausnehmungen oder Nuten 7 sind im vorliegenden Ausführungsbeispiel als Falz 7 ausgebildet, der zur komplementären Aufnahme der Fassränder dient.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Transportgut, Fass
- 2: Ladungsträger, Palette
- 3: Befestigungselement, Schraube
- 4: Halteelement
- 5: Gewinde
- 6: Schraubenkopf
- 7: Ausnehmung, Nut
- 8: Durchgang, Bohrung
- 9: Vertiefung, Ansenkung
- 10: Abschrägung, Abrundung

## Patentansprüche

1. Vorrichtung zur Sicherung von Fässern (1) an einer Palette (2), mit einem an der Palette (2) befestigbaren, stabförmigen Befestigungselement (3) und einem mit dem Befestigungselement (3) zusammenwirkenden und auf die Fässer (1) auflegbaren Halteelement (4) zum Eingriff mit den Fässern (1),
**dadurch gekennzeichnet, dass** das Befestigungselement (3) als Schraube mit einem am mit dem Halteelement (4) zusammenwirkenden Ende ausgebildeten Schraubenkopf (6) und mit einem selbstschneidenden Gewinde (5) am anderen Ende der Schraube zur unmittelbaren Befestigung an der Palette (2) durch Einschrauben der Schraube in die Palette (2) ausgebildet ist.

2. Vorrichtung nach Anspruch 1, **dadurch gekennzeichnet, dass** das Halteelement (4) einen Durchgang (8) für die Schraube aufweist.

3. Vorrichtung nach Anspruch 1 oder 2, **dadurch gekennzeichnet, dass** das Halteelement (4) mindestens eine bogenförmige Ausnehmung oder Nut (7) zur Aufnahme eines Randes der Fässer (1) aufweist.

4. Vorrichtung nach einem der Ansprüche 1 bis 3, **dadurch gekennzeichnet, dass** das Halteelement (4) aus Kunststoff ausgebildet ist.

5. Vorrichtung nach einem der Ansprüche 1 bis 3, **dadurch gekennzeichnet, dass** das Halteelement (4) aus Metall, insbesondere aus Aluminium oder Stahlblech, ausgebildet ist.

6. Vorrichtung nach einem der Ansprüche 3 bis 5, **dadurch gekennzeichnet, dass** das Halteelement (4) im Bereich der Ausnehmung oder Nut (7) zur Dämpfung Abschnitte oder Einlagen aus Kunststoff oder Gummi aufweist.

## Claims

1. Device for securing barrels (1) to a pallet (2) having a rod-like securing element (3) which can be secured to the pallet (2) and a retention element (4) which cooperates with the securing element (3) and which can be placed on the barrels (1) for engagement with the barrels (1),
**characterised in that** the securing element (3) is constructed as a screw having a screw head (6) which is formed at the end which cooperates with the retention element (4) and having a self-tapping thread (5) at the other end of the screw for directly securing to the pallet (2) by the screw being screwed into the pallet (2).

2. Device according to claim 1, **characterised in that** the retention element (4) has a passage (8) for the screw.

3. Device according to claim 1 or 2, **characterised in that** the retention element (4) has at least one curved recess or groove (7) for receiving an edge of the barrels (1).

4. Device according to any one of claims 1 to 3, **characterised in that** the retention element (4) is constructed from plastics material.

5. Device according to any one of claims 1 to 3, **characterised in that** the retention element (4) is constructed from metal, in particular from aluminium or sheet steel.

6. Device according to any one of claims 3 to 5, **characterised in that** the retention element (4) has in the region of the recess or groove (7) portions or inlays of plastics material or rubber for damping.

## Revendications

1. Dispositif de sécurisation de fûts (1) sur une palette (2), avec un élément de fixation (3) en forme de tige, pouvant être fixé sur la palette (2) et un élément de maintien (4), interagissant avec l'élément de fixation (3) et pouvant être posé sur les fûts (1), destiné à être emboîté avec les fûts (1),
**caractérisé en ce que**
l'élément de fixation (3) est conçu comme une vis avec une tête de vis (6) prévue au niveau de l'extrémité interagissant avec l'élément de maintien (4) et avec un filetage auto-taraudeur (5) au niveau de l'autre extrémité de la vis pour la fixation directe sur la palette (2) par le vissage de la vis dans la palette (2).

2. Dispositif selon la revendication 1, **caractérisé en ce que** l'élément de maintien (4) comprend un passage (8) pour la vis.

3. Dispositif selon la revendication 1 ou 2, **caractérisé en ce que** l'élément de maintien (4) comprend au moins un évidement ou une rainure (7) en forme d'arc pour le logement d'un bord des fûts (1).

4. Dispositif selon l'une des revendications 1 à 3, **caractérisé en ce que** l'élément de maintien (4) est constitué de matière plastique.

5. Dispositif selon l'une des revendications 1 à 3, **caractérisé en ce que** l'élément de maintien (4) est constitué de métal, plus particulièrement d'aluminium ou d'une tôle d'acier.

6. Dispositif selon l'une des revendications 3 à 5, **caractérisé en ce que** l'élément de maintien (4) comprend, au niveau de l'évidement ou de la rainure (7), pour l'amortissement, des portions ou des inserts en matière plastique ou en caoutchouc.
